# EUROPEAN PATENT SPECIFICATION

(11) **EP 1 734 704 B1**
(45) Date of publication and mention of the grant of the patent: **10.09.2008**
(21) Application number: 06011939.3
(22) Date of filing: 09.06.2006
(51) Int. Cl.: H04L 12/56, H04L 12/28

(54) **Automatic detection and configuration of a device connected to a wireless network**
Automatische Erkennung und Konfiguration eines mit einem drahtlosen Netzwerk verbundenen Gerätes
Détection et configuration automatique d'un appareil connecté à un réseau sans fil

(30) Priority: 16.06.2005 JP 2005176745
(43) Date of publication of application: 20.12.2006
(73) Proprietor: Sony Corporation, Tokyo (JP)
(72) Inventor: Kawakami, Daisuke, Shinagawa-ku, Tokyo (JP); Endo, Akira, Shinagawa-ku, Tokyo (JP); Kikuchi, Akihiro, Shinagawa-ku, Tokyo (JP)
(74) Representative: Müller - Hoffmann & Partner

(56) References cited:
- US-A1- 2003 018 889
- US-A1- 2004 111 494
- US-A1- 2004 236 860

## Description

The present invention claims priority of Japanese Patent Application JP 2005-176745 filed in the Japanese Patent Office on June 16, 2005.

### BACKGROUND OF THE INVENTION

### 1. Field of the Invention

The present invention relates to a wireless communication setting method, a wireless communication setting computer program, a storage medium storing the wireless communication setting computer program, a wireless communication apparatus and to a wireless communication system. More particularly, the invention relates to those suitably applicable to execute setting work on each of a plurality of wireless communication apparatuses such that mutual wireless communication is established between these apparatuses.

### 2. Description of the Related Art

US 2003/018889 A1, 23 January 2003 discloses a wireless communication setting method and a wireless communication apparatus in accordance with the precharacterizing parts of the independent claims 1 and 4, respectively. This document discloses a prior art wireless communication setting method for a wireless communication system having a plurality of wireless communication apparatuses each having a setting block to which a wireless data communication destination is set and a wireless data communication block for executing wireless data communication block for executing wireless data communication with said wireless data communication destination set to said setting block and a proximity wireless communication apparatus for executing wireless communication with any of said plurality of wireless communication apparatuses brought into proximity of a predetermined range of said proximity wireless communication apparatus. A smart hardware storage device referred to as token 116 or 26 in Fig. 1 of this document may be embodied by a wireless hand-held device such as a personal digital assistance.

In some related-art wireless communication systems, each of the wireless communication apparatuses is adapted to execute mutual wireless data communication on the basis of a standard such as IEEE 802.1 1b for example (refer to Japanese Patent Laid-open No. Hei 10-93508).

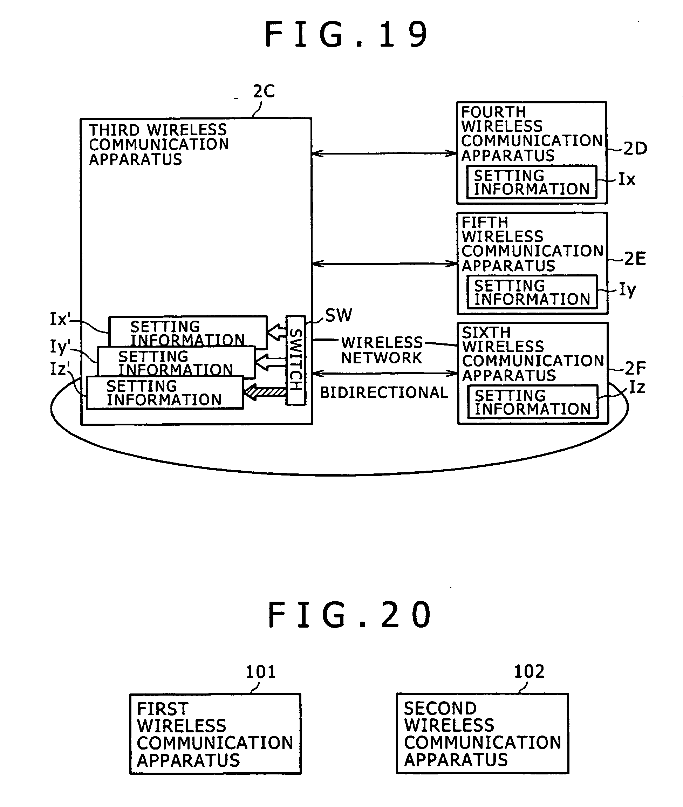

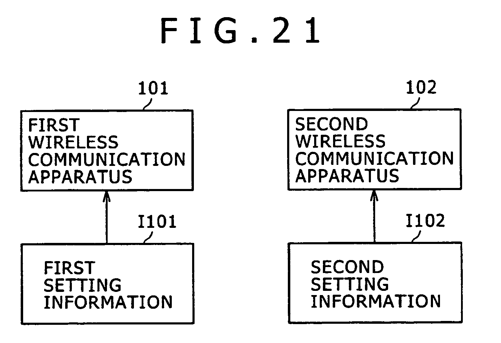

For example, in order to provide mutual wireless data communication between a first wireless communication apparatus 101 and a second wireless communication apparatus 102 shown in FIG. 20, it is necessary to manually enter setting information I101 and setting information I102 into the first wireless communication apparatus 101 and the second wireless communication apparatus 102, respectively, as shown in FIG. 21.

The following describes contents of these pieces of setting information I101 and I102. For example, communication destination information (an IP (Internet Protocol) address for example) is set to the first setting information I101 to be entered in the first wireless communication apparatus 101 so as to identify the second wireless communication apparatus 102 that is the destination of wireless data communication. Also, wireless network identification information (SSID (Service Set Identifier) for example) is set to this first setting information I101 so as to identify a wireless network (or a wireless LAN (Local Area Network)) that is formed between the first wireless communication apparatus 101 and the second wireless communication apparatus 102. In addition, cryptographic key information (WEP (Wired Equivalent Privacy) key for example) is set to the first setting information I101 so as to encrypt data to be transferred with the second wireless communication apparatus 102.

On the other hand, communication destination identification information is set to the second setting information I102 to be entered in the second wireless communication apparatus 102 so as to identify the first wireless communication apparatus 101 that is the destination of wireless data communication. Also, the same wireless network identification information and cryptographic key information as those to be set to the first wireless communication apparatus 101 are set to the second setting information I102.

Consequently, the first wireless communication apparatus 101 can identify the second wireless communication apparatus 102 as the destination of wireless data communication on the basis of the communication destination information set to the first setting information I101. Also, the second wireless communication apparatus 102 can identify the first wireless communication apparatus 101 as the destination of wireless data communication on the basis of the communication destination information set to the second setting information I102. Therefore, the first wireless communication apparatus 101 and the second wireless communication apparatus 102 become ready for wireless data communication bidirectionally, thereby transferring data mutually.

Actually, the first wireless communication apparatus 101 and the second wireless communication apparatus 102 determine whether the wireless network identification information set to these apparatuses is identical with each other. If these pieces of identification information are found identical, the apparatuses 101 and 102 can wirelessly communicate with each other. Consequently, the first wireless communication apparatus 101 and the second wireless communication apparatus 102 can prevent interference from other wireless communication apparatuses to which wireless network identification information different from the wireless network identification information set to these wireless communication apparatuses 101 and 102. This configuration enhances the security of the wireless data communication between the first wireless communication apparatus 101 and the second wireless communication apparatus 102.

Further, the first wireless communication apparatus 101 and the second wireless communication apparatus 102 are adapted to encrypt data to be wirelessly communicated, by use of the same cryptographic key information as set to each thereof. Consequently, any other wireless communication apparatuses to which different cryptographic key information from the cryptographic key information set to the first wireless communication apparatus 101 and the second wireless communication apparatus 102 is set are prevented from decrypting the intercepted encrypted data, if any, communicated between the first wireless communication apparatus 101 and the second wireless communication apparatus 102. Thus, this configuration enhances the security of the wireless data communication between the first wireless communication apparatus 101 and the second wireless communication apparatus 102.

### SUMMARY OF THE INVENTION

In order to provide mutual wireless data communication between the first wireless communication apparatus 101 and the second wireless communication apparatus 102 in a wireless communication system having the above-mentioned configuration, it is necessary to manually enter communication destination identification information, wireless network identification information, and cryptographic key information into the first wireless communication apparatus 101 as the first setting information I101 and the second wireless communication apparatus 102 as the second setting information I102. Therefore. the above-mentioned related-art involves a problem of the inconvenience in setting necessary information to the first wireless communication apparatus 101 and the second wireless communication apparatus 102, for example.

Therefore, the present invention addresses the above-identified and other problems associated with related-art methods and apparatuses and solves the addressed problems by providing , a wireless communication setting method, a wireless communication setting computer and a storage medium storing the wireless communication setting computer program that are capable of setting wireless communication apparatuses significantly easily.

According to a first essential aspect the present invention provides a wireless communication setting method for a wireless communication system having a plurality of wireless communication apparatuses each having a setting block to which a wireless data communication destination is set and a wireless data communication block for executing wireless data communication with said wireless data communication destination set to said setting block, and a proximity wireless communication apparatus for executing wireless communication with any of said plurality of wireless communication apparatuses brought into proximity of a predetermined range of said proximity wireless communication apparatus; characterized in that said wireless communication setting method comprises the steps of in said proximity wireless communication apparatus, storing communication mate identification information received from said wireless communication apparatuses brought into proximity of said proximity wireless communication apparatus for identifying said wireless communication apparatus as a communication mate an wirelessly transmitting communication mate identification information if stored to said wireless communication apparatus brought into proximity of said proximity wireless communication apparatus; and in each of said plurality of wireless communication apparatuses; wirelessly transmitting communication mate identification information to said proximity wireless communication apparatus, if said communication mate identification information is not stored in said proximity wireless communication apparatus brought into proximity of said wireless communication apparatus, for identifying said wireless communication apparatus itself as a communication mate; and setting said wireless communication apparatus to said setting block as a wireless data communication destination, said wireless communication apparatus being identified by said communication mate identification information received from said proximity wireless communication apparatus if said communication mate identification information is stored in said proximity wireless communication apparatus brought into proximity of said wireless communication apparatus.

According to a second essential aspect the present invention provides a wireless communication setting computer program comprising code means which when executed in a processor of a computer perform all the steps of the method of the invention.

Further, according to a third essential aspect the present invention provides a storage medium storing such a wireless communication setting computer program.

According to a fourth essential aspect, the present invention provides a wireless communication apparatus comprising a setting block to which a wireless data communication destination is set; a wireless data communication block for executing wireless data communication with said wireless data communication destination set to said setting block; and a proximity wireless communication block characterized in that said proximity wireless communication block is configured for, if a proximity wireless communication apparatus having a storage block for storing communication mate identification information received from a wireless communication apparatus brought to proximity of a predetermined range of said proximity wireless communication apparatus for identifying said wireless communication apparatus as a communication mate and a wireless communication block for transmitting said communication mate identification information if stored in said storage block to said proximity wireless communication apparatus, does not store said communication mate identification information in said storage block, transmitting communication mate identification information for identifying said wireless communication apparatus itself as a communication mate to said proximity wireless communication apparatus; wherein said wireless communication apparatus further comprises a setting control block for, if said communication mate identification information is stored in said storage block of said proximity wireless communication apparatus brought to proximity of said wireless communication apparatus, receiving said communication mate identification information from said proximity wireless communication apparatus and setting said wireless communication apparatus identified by the received communication mate identification information to said setting block as a wireless data communication destination.

According to a fifth essential aspect, the present invention provides a wireless communication system which comprises a plurality of such wireless communication apparatuses and a proximity wireless communication apparatus as defined above, wherein a wireless communication system comprising a plurality of wireless communication apparatuses and a proximity wireless communication apparatus both in accordance with claim 4, wherein each of said wireless communication apparatuses has said setting block, said wireless data communication block, said proximity wireless communication block and said setting control block, and said proximity wireless communication apparatus is configured for executing wireless communication with any of said plurality of wireless communication apparatuses.

According to an advantageous development each of said plurality of wireless communication apparatuses of the wireless communication system transmit communication mate identification information for identifying anyone of said plurality of wireless communication apparatuses as a communication mate by said wireless data communication destination set to setting block.

According to a further advantageous development, the proximity wireless communication apparatus of the inventive wireless communication system defined above stores, upon reception of wireless network identification information (SID) for identifying a wireless network along with said communication mate identification information (IPS1) from any one of said plurality of wireless communication apparatuses, the received wireless network identification information (SID) into said storage block, and transmits said wireless network identification information (SID) to any one of said plurality of wireless communication apparatuses brought to proximity of said proximity wireless communication apparatus along with said communication mate identification information (IPS1) if said wireless network identification information (SID) is stored in said storage block along with said communication mate identification information (IPS1) and any one of said plurality of wireless communication apparatuses transmits said wireless network identification information (SID) to said proximity wireless communication apparatus along with communication mate identification information (IPS1) for identifying said wireless communication apparatus itself as a communication mate if said communication mate identification information (IPS1) and said wireless network identification information (SID) are not stored in said proximity wireless communication apparatus brought to proximity of said wireless communication apparatus, and receives said wireless network identification information (SID) to be transmitted along with said communication mate identification information (IPS1) from said proximity wireless communication apparatus to set the received wireless network identification information (SID) to said setting block if said communication mate identification information (IPS1) and said wireless network identification information (SID) are stored in said proximity wireless communication apparatus brought to proximity of said wireless communication apparatus; thereby executing wireless data communication with any one of said plurality of wireless communication apparatuses, that has been set to said setting block as a wireless data communication destination among said plurality of wireless communication apparatuses identified by said wireless network identification information set (SID) to said setting block.

According to an advantageous development each of said plurality of wireless communication apparatuses of the wireless communication system transmit communication mate identification information for identifying anyone of said plurality of wireless communication apparatuses as a communication mate by said wireless data communication destination set to setting block.

According to a further advantageous development, the proximity wireless communication apparatus of the inventive wireless communication system defined above stores, upon reception of wireless network identification information (SID) for identifying a wireless network along with said communication mate identification information (IPS1) from any one of said plurality of wireless communication apparatuses, the received wireless network identification information (SID) into said storage block, and transmits said wireless network identification information (SID) to any one of said plurality of wireless communication apparatuses brought to proximity of said proximity wireless communication apparatus along with said communication mate identification information (IPS1) if said wireless network identification information (SID) is stored in said storage block along with said communication mate identification information (IPS1) and any one of said plurality of wireless communication apparatuses transmits said wireless network identification information (SID) to said proximity wireless communication apparatus along with communication mate identification information (IPS1) for identifying said wireless communication apparatus itself as a communication mate if said communication mate identification information (IPS1) and said wireless network identification information (SID) are not stored in said proximity wireless communication apparatus brought to proximity of said wireless communication apparatus, and receives said wireless network identification information (SID) to be transmitted along with said communication mate identification information (IPS1) from said proximity wireless communication apparatus to set the received wireless network identification information (SID) to said setting block if said communication mate identification information (IPS1) and said wireless network identification information (SID) are stored in said proximity wireless communication apparatus brought to proximity of said wireless communication apparatus; thereby executing wireless data communication with any one of said plurality of wireless communication apparatuses, that has been set to said setting block as a wireless data communication destination among said plurality of wireless communication apparatuses identified by said wireless network identification information set (SID) to said setting block.

As described, it is possible to store the communication mate identification information for identifying that wireless communication apparatus as a communication mate into the proximity wireless communication apparatus by bringing the proximity wireless communication apparatus in which communication mate identification information is not stored to the proximity of any one of the wireless communication apparatuses. Then, it is possible to set the wireless communication apparatus identified by this communication mate identification information to another wireless communication apparatus as the destination of wireless data communication by bringing the proximity wireless communication apparatus in which this communication mate identification information is stored to the other wireless communication apparatus.

According to an embodiment of the present invention, it is possible to store the communication mate identification information for identifying that wireless communication apparatus as a communication mate into the proximity wireless communication apparatus by bringing the proximity wireless communication apparatus in which communication mate identification information is not stored to the proximity of any one of the wireless communication apparatuses. Then, it is possible to set the wireless communication apparatus identified by this communication mate identification information to another wireless communication apparatus as the destination of wireless data communication by bringing the proximity wireless communication apparatus in which this communication mate identification information is stored to the other wireless communication apparatus. This novel configuration allows the setting of necessary setting information to each wireless communication apparatus without requiring operator's manual entry of the setting information, thereby significantly facilitating the setting work of wireless communication apparatuses.

### BRIEF DESCRIPTION OF THE DRAWINGS

FIG. 1 is a perspective view illustrating an exemplary configuration of a wireless communication system practiced as one embodiment of the invention;
FIG. 2 is a block diagram illustrating an exemplary configuration of a wireless communication apparatus;
FIGS. 3A and 3B are schematic diagrams describing temporary setting information and first setting information;
FIG. 4 is a block diagram illustrating an exemplary configuration of a non-contact IC card;
FIG. 5 is a schematic diagram illustrating a packet structure at the time of storage status notification;
FIG. 6 is a schematic diagram illustrating a status in which temporary information is stored in the above-mentioned non-contact IC card;
FIG. 7 is a schematic diagram illustrating a packet structure at the time of temporary information transmission;
FIG. 8 is a schematic diagram illustrating a status in which temporary setting information stored in the above-mentioned non-contact IC card is stored in the above-mentioned wireless communication apparatus;
FIG. 9 is a schematic diagram illustrating second setting information;
FIG. 10 is a schematic diagram illustrating a status in which completion of setting is notified;
FIG. 11 is a schematic diagram illustrating a packet structure at the time of setting completion notification;
FIG. 12 is a schematic diagram illustrating a status in which bidirectional wireless data communication is ready;
FIG. 13 is a flowchart indicative of a setting processing procedure;
FIG. 14 is a flowchart indicative of a temporary setting information write processing procedure;
FIG. 15 is a flowchart indicative of a temporary setting information read processing procedure;
FIG. 16 is a schematic diagram illustrating a card detection processing control screen;
FIG. 17 is a schematic diagram illustrating exemplary wireless data communication executed via an access point;
FIG. 18 is a schematic diagram illustrating a wireless data communication system (1) in which one wireless communication apparatus executes wireless data communication with a plurality of wireless communication apparatuses;
FIG. 19 is a schematic diagram illustrating a wireless data communication system (2) in which one wireless communication apparatus executes wireless data communication with a plurality of wireless communication apparatuses;
FIG. 20 is a schematic diagram illustrating a status in which there is no connection between wireless communication apparatuses; and
FIG. 21 is a schematic diagram illustrating a status in which necessary information is set to each wireless communication apparatus.

### DETAILED DESCRIPTION OF THE PREFERRED EMBODIMENTS

This invention will be described in further detail by way of embodiments thereof with reference to the accompanying drawings.

### (1) Configuration of a wireless communication system

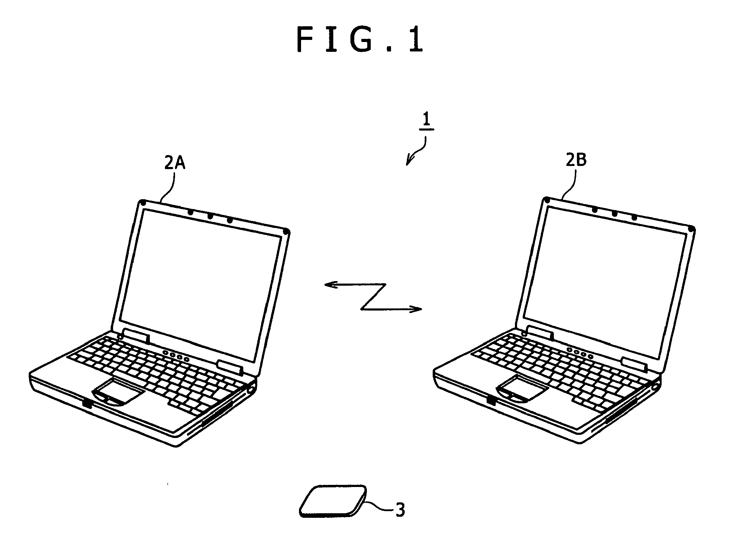

Now, referring to FIG. 1, a numeral 1 indicates a wireless communication system as a whole. The wireless communication system 1 has a first wireless communication apparatus 2A, a second wireless communication apparatus 2B, and a non-contact IC (Integrated Circuit) card 3 that are capable of wireless data communication based on a standard such as IEEE 802.11b, for example.

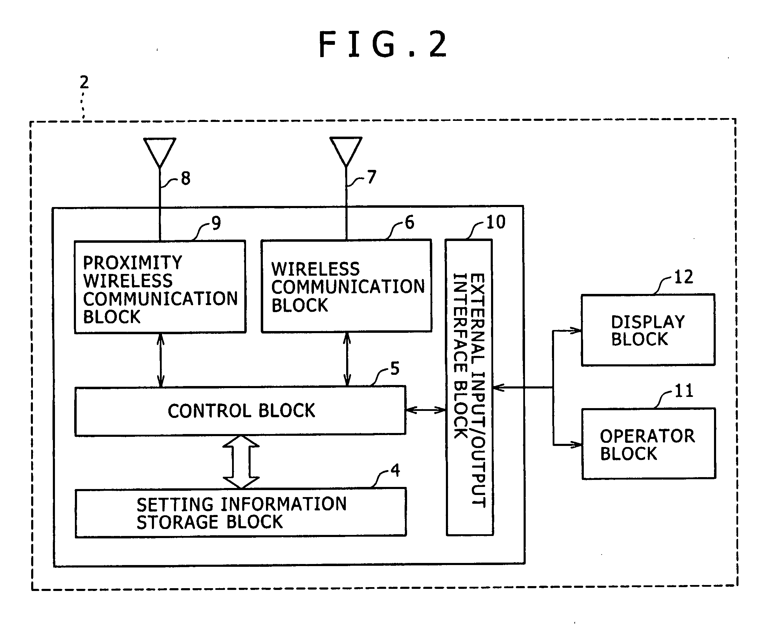

The following describes a configuration of the first wireless communication apparatus 2A with reference to FIG. 2. The first wireless communication apparatus 2A has a setting information storage block 4 for storing setting information indicative of communication destination identification information for identifying a destination of wireless data communication. A control block 5 for executes overall control on the whole first wireless communication apparatus 2A. The control block 5 refers to communication destination identification information in the setting information stored in the setting information storage block 4. Then, the control block 5 executes the wireless data communication based on a standard such as IEEE 802.11b for example with a wireless data communication destination identified by the referenced communication destination identification information via a wireless communication block 6 and a wireless communication antenna 7. Also, the first wireless communication apparatus 2A has a proximity wireless communication antenna 8 and a proximity wireless communication block 9 for executing wireless communication with the non-contact IC card 3 that comes close to a predetermined range. The control block 5 of the first wireless communication apparatus 2A is connected to an operator block 11 and a display block 12 via an input/output interface block 10. It should be noted that the second wireless communication apparatus 2B according to the present embodiment has circuit blocks (4 through 11) generated in generally the same manner as those of the first wireless communication apparatus 2A.

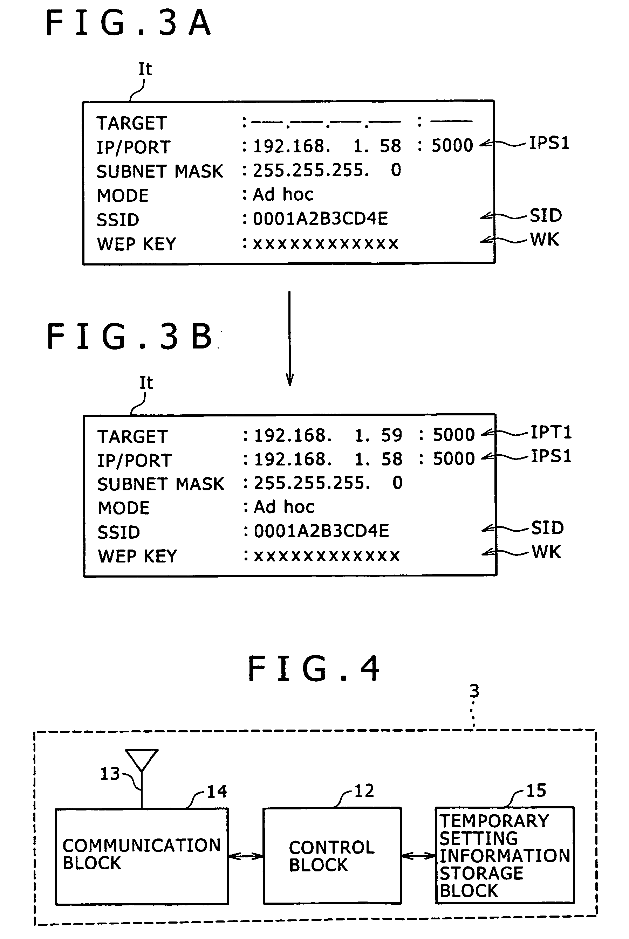

At this moment, because a setting operation has not been executed on the first wireless communication apparatus 2A, temporary setting information It as shown in FIG. 3A for example is stored in the setting information storage block 4 of the first wireless communication apparatus 2A. This temporary setting data It contains communication mate identification information IPS1 (in this case, an IP address allocated to the first wireless communication apparatus 2A), wireless network identification information SID (in this case, SSID), and cryptographic key information WK (in this case, a WEP key). The communication mate identification information IPS1 makes the destination of wireless data communication identify the first wireless communication apparatus 2A itself as the communication mate. The wireless network identification information SID identifies a wireless network formed between the source and the destination of wireless data communication. The cryptographic key information WK encrypts data to be transferred with the destination of wireless data communication.

In the present embodiment, device unique information (in this case, MAC (Media Access Control) address) unique to the first wireless communication apparatus 2A is allocated as wireless network identification SID contained in this temporary setting information It. This configuration prevents the wireless network formed by the first wireless communication apparatus 2A and the wireless network formed by the other wireless communication apparatus from getting into contention. In the present embodiment, because this temporary setting information It contains an IP address of class C (192. 168........ ) as communication mate identification information IPS1, a sub net mask (255. 255. 255. 0) for example corresponding to this IP address is also included. In addition, temporary setting information It in this case has an ad hoc mode (Ad hoc) for allowing the first wireless communication apparatus 2A to directly wirelessly communicate with the wireless communication destination without using the access point.

When a non-contact IC card detection command operation is executed through the operator block 11 of the first wireless communication apparatus 2A to detect the non-contact IC card 3, the control block 5 of the first wireless communication apparatus 2A executes detection processing for detecting the non-contact IC card 3. Actually, in this detection processing, the control block 5 of the first wireless communication apparatus 2A is adapted to repetitively wirelessly transmit at predetermined time intervals a storage status notification request signal for requesting the non-contact IC card 3 to notify whether or not temporary setting information It is stored, via the proximity wireless communication block 9 and the proximity wireless communication antenna 8 in this order (this is known as polling processing).

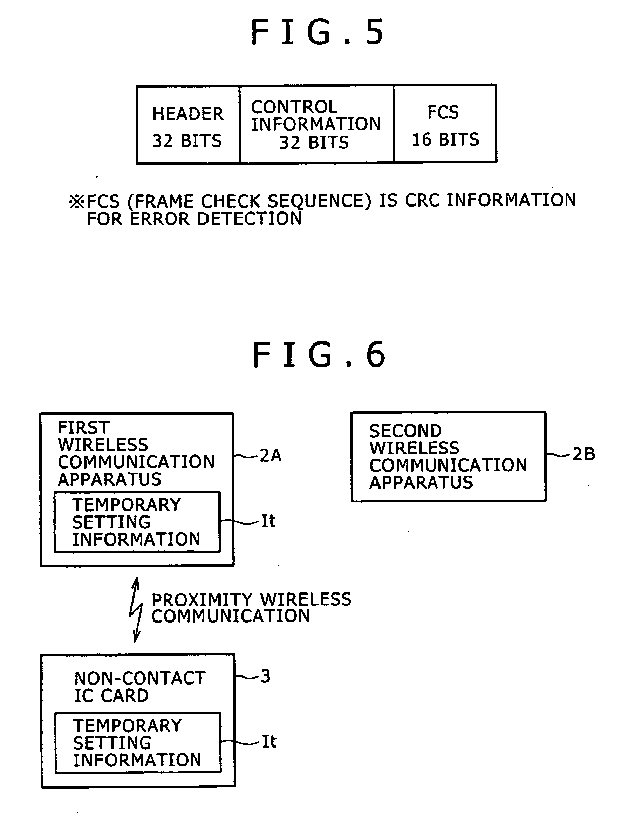

When the non-contact IC card 3 is brought to the proximity of the proximity wireless communication antenna 8 arranged on the first wireless communication apparatus 2A, a control block 12 of the non-contact IC card 3 shown in FIG. 4 accordingly receives the storage status notification request signal wirelessly transmitted from the first wireless communication apparatus 2A, via an antenna 13 and a communication block 14. Receiving the storage status notification request signal, the control block 12 checks that temporary setting information It is not stored in a temporary setting information storage block 15 and then transmits a storage status notification signal indicative that temporary setting information It is not stored, via the communication block 14 and the antenna 13. In the case of the present embodiment, this storage status notification signal has packet structure as shown in FIG. 5, in which information indicative whether or not temporary setting information It is stored is included in control information.

The control block 5 of the first wireless communication apparatus 2A receives the storage status notification signal from the non-contact IC card 3 via the proximity wireless communication antenna 8 and the proximity wireless communication block 9 in this order. If temporary setting information It is found not stored in the non-contact IC card 3, accordingly reads temporary setting information It from the setting information storage block 4, thereby wirelessly transmitting the read temporary setting information to the non-contact IC card 3 via the proximity wireless communication block 9 and the proximity wireless communication antenna 8 in this order.

Receiving temporary setting information It from the first wireless communication apparatus 2A via the antenna 13 and the communication block 14, the control block 12 of the non-contact IC card 3 stores the received information into the temporary setting information storage block 15.

Thus, in the wireless communication system 1, it is possible to store temporary setting information It from the first wireless communication apparatus 2A into the non-contact IC card 3 by only bringing the non-contact IC card 3 to the proximity of the first wireless communication apparatus 2A as shown in FIG. 6.

Then, when a non-contact IC card detection command operation is executed through the operator block 11 of the second wireless communication apparatus 2B to detect the non-contact IC card 3, the control block 5 of the second wireless communication apparatus 2B executes detection processing for detecting the non-contact IC card 3. Actually, in this detection processing, the control block 5 of the second wireless communication apparatus 2B is adapted to repetitively wirelessly transmit at predetermined time intervals a storage status notification request signal for requesting the non-contact IC card 3 to notify whether or not temporary setting information It is stored, via the proximity wireless communication block 9 and the proximity wireless communication antenna 8 in this order.

When the non-contact IC card 3 is brought to the proximity of the proximity wireless communication antenna 8 arranged on the second wireless communication apparatus 2B, the control block 12 of the non-contact IC card 3 accordingly receives the storage status notification request signal wirelessly transmitted from the second wireless communication apparatus 2B, via an antenna 13 and a communication block 14. Receiving the storage status notification request signal, the control block 12 of the non-contact IC card 3 checks that temporary setting information It is stored in a temporary setting information storage block 15 and then transmits a storage status notification signal indicative that temporary setting information It is stored, via the communication block 14 and the antenna 13.

The control block 5 of the second wireless communication apparatus 2B receives the storage status notification signal from the non-contact IC card 3 via the proximity wireless communication antenna 8 and the proximity wireless communication block 9 in this order. If temporary setting information It is found stored in the non-contact IC card 3, accordingly reads temporary setting information It from the setting information storage block 4, thereby wirelessly transmitting a temporary setting information transmission request signal via the proximity wireless communication block 9 and the proximity wireless communication antenna 8 in this order to request the non-contact IC card 3 for transmitting temporary setting information It.

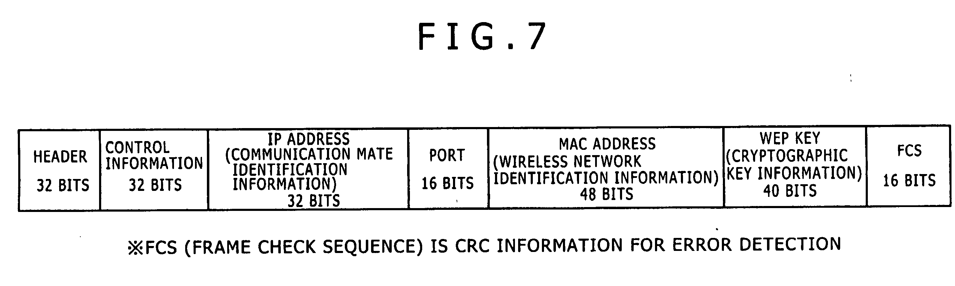

Receiving the temporary setting information transmission request signal from the second wireless communication apparatus 2B via the antenna 13 and the communication block 14 in this order, the control block 12 of the non-contact IC card 3 reads temporary setting information It from the temporary setting information storage block 15 and wirelessly transmits the read temporary setting information via the communication block 14 and the antenna 13 in this order. In this case, temporary setting information It is wirelessly transmitted from the non-contact IC card 3 on the basis of a packet structure shown in FIG. 7.

Thus, the control block 5 of the second wireless communication apparatus 2B receives temporary setting information It from the non-contact IC card 3 via the proximity wireless communication antenna 8 and the proximity wireless communication block 9 in this order and stores the received information into the setting information storage block 4.

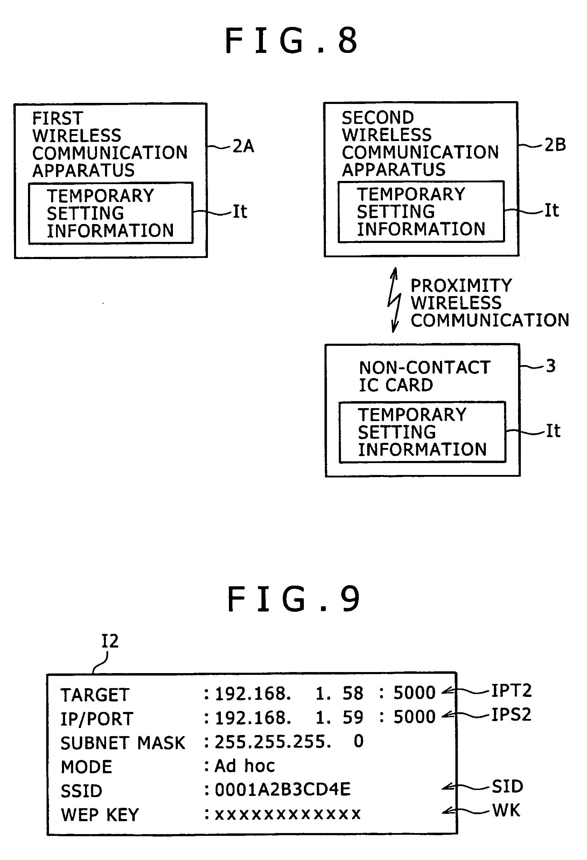

Thus, in the wireless communication system 1, it is possible to store temporary setting information It stored in the non-contact IC card 3 from the first wireless communication apparatus 2A into the second wireless communication apparatus 2B by only bringing the non-contact IC card 3 to the proximity of the second wireless communication apparatus 2B as shown in FIG. 8.

Next, the control block 5 of the second wireless communication apparatus 2B generates setting information necessary for wireless data communication on the basis of temporary setting information It stored in the setting information storage block 4 (in what follows, the setting information to be set to the first wireless communication apparatus 2A is referred to as "first setting information" and the setting information to be set to the second wireless communication apparatus 2B is referred to as "second setting information" for the convenience of description).

To be more specific, the control block 5 of the second wireless communication apparatus 2B determines that communication mate identification information IP1 indicated in this temporary setting information It (FIG. 3A) as information for identifying the destination of wireless data communication of the second wireless communication apparatus 2B. Then, the control block 5 sets this communication mate identifying information IPS1 to second setting information I2 as communication destination identification information IPT2 as shown in FIG. 9. Thus, the control block 5 of the second wireless communication apparatus 2B can set, as second setting information I2, communication destination identification information IPT2 for identifying the first wireless communication apparatus 2A that becomes the destination of wireless data communication.

In addition, the control block 5 of the second wireless communication apparatus 2B generates communication mate identification information IPS2 so that the destination of wireless data communication identifies the second wireless communication apparatus 2B itself as the communication mate of wireless data communication. This communication mate identification information IPS2 is generated so as not to overlap communication destination identification information IPT2 that was set. Further, the control block 5 of the second wireless communication apparatus 2B sets wireless network identification information SID and cryptographic key information WK contained in this temporary setting information It directly to second setting information I2. Because the ad hoc mode is set to this temporary setting information It in the present embodiment, the control block 5 of the second wireless communication apparatus 2B sets the ad hoc mode to second setting information I2 in the same manner. Also, the control block 5 of the second wireless communication apparatus 2B sets a sub net mask contained in this temporary setting information It directly to second setting information I2.

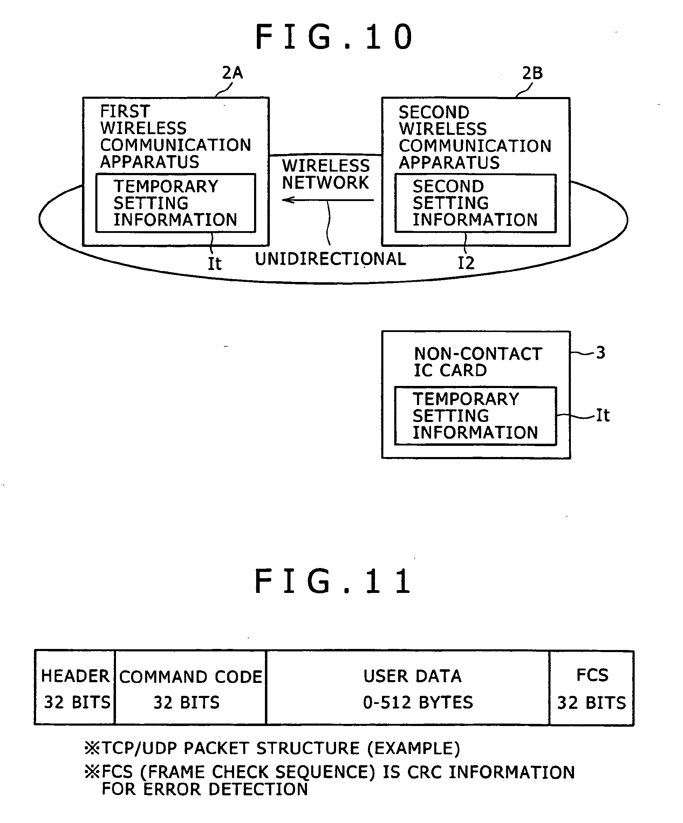

Then, the first and second wireless communication apparatuses 2A and 2B wirelessly communicate with each other to determine whether there is a match between wireless network identification information SID set to the second wireless communication apparatus 2B and wireless network identification information SID set to the first wireless communication apparatus 2A. If a match is found, then a wireless network made up of the first and second wireless communication apparatuses 2A and 2B is formed as shown in FIG. 10.

Next, the control block 5 of the second wireless communication apparatus 2B transmits a setting completion notification signal indicative of the completion of setting of second setting information I2 to the first wireless communication apparatus 2A identified by communication destination identification information IPT2 contained in second setting information I2, via the wireless communication block 6 and the wireless communication antenna 7. In the present embodiment, this setting completion notification signal has a packet structure as shown in FIG. 11 and contains, in the header thereof, communication mate identification information IPS2 for identifying the second wireless communication apparatus 2B as the mate of communication.

Receiving the setting notification completion signal from the second wireless communication apparatus 2B via the wireless communication antenna 7 and the wireless communication block 6, the control block 5 of the first wireless communication apparatus 2A determines that communication mate identification information IPS2 contained in the received setting completion notification information as information for identifying the destination of wireless data communication of the first wireless communication apparatus 2A. Then, the control block 5 generates first setting information I1 by setting this communication mate identification information IPS2 to temporary setting information It as communication destination identification information IPT1 as shown in FIG. 3B. Thus, the control block 5 of the first wireless communication apparatus 2A can set, as first setting information I1, communication destination identification information IPT1 for identifying the second wireless communication apparatus 2B that becomes the destination of wireless data communication.

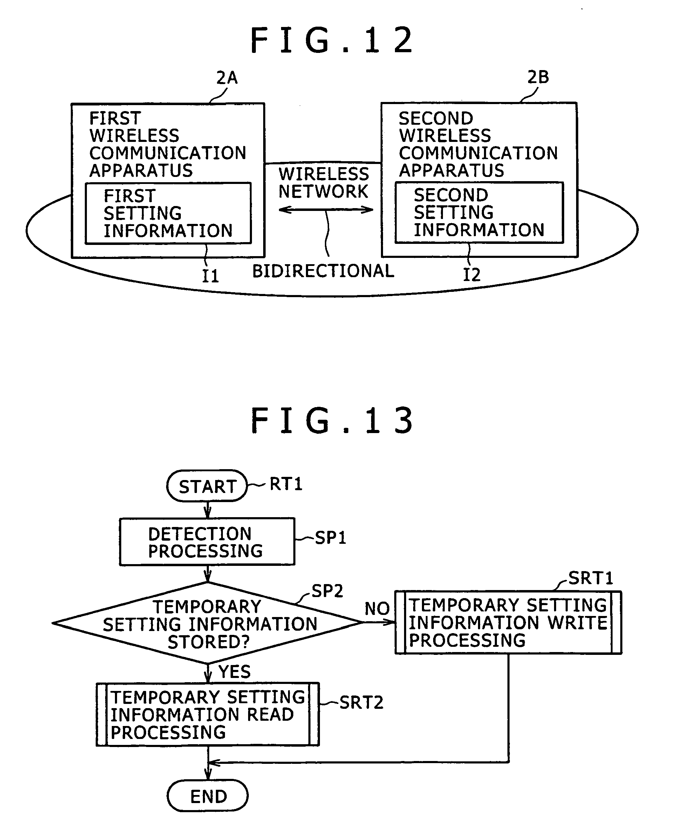

Consequently, the first wireless communication apparatus 2A can identify the second wireless communication apparatus 2B as the destination of wireless data communication on the basis of communication destination identification information IPT1 contained in first setting information I1 that was set. The second wireless communication apparatus 2B also can identify the first wireless communication apparatus 2A as the destination of wireless data communication on the basis of communication destination identification information IPT2 contained in second setting information I2 that was set. As a result, the first and second wireless communication apparatus 2A and 2B can bidirectionally wirelessly communicate with each other via the wireless communication block 6 and the wireless communication antenna 7 as shown in FIG. 12, thereby transferring data with each other.

Both the first and second wireless communication apparatuses 2A and 2B have same cryptographic key information WK. Therefore, if the first wireless communication apparatus 2A encrypts data by use of cryptographic key WK set to first setting information I1 and then wirelessly transmits the encrypted data to the second wireless communication apparatus 2B, the second wireless communication apparatus 2B that receives this encrypted data can decrypt it by use of cryptographic key information WK set to second setting information I2.

### (2) Setting processing procedures

The following describes setting processing procedure RT1 to be executed when setting information is set to the first and second wireless communication apparatuses 2A and 2B with reference to flowcharts shown in FIGS. 13, 14, and 15. First, the execution of setting processing procedure RT1 by the first wireless communication apparatus 2A will be described, followed by the execution of setting processing procedure RT1 by the second wireless communication apparatus 2B.

### (2-1) Execution of a setting processing procedure by the first wireless communication apparatus

In step SP1 shown in FIG. 13, when a non-contact IC card detection command operation is executed through the operator block 11, the control block 5 of the first wireless communication apparatus 2A executes detection processing for detecting the non-contact IC card 3. Actually, in this detection processing, the control block 5 of the first wireless communication apparatus 2A repetitively wirelessly transmits at predetermined time intervals a storage status notification request signal for requesting the non-contact IC card 3 to notify whether or not temporary setting information It is stored, via the proximity wireless communication block 9 and the proximity wireless communication antenna 8 in this order.

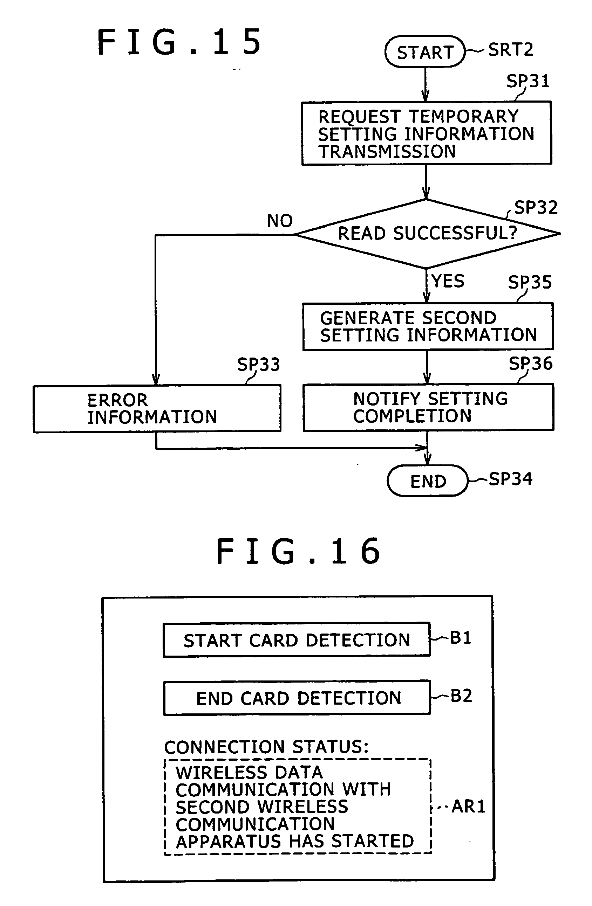

In the present embodiment, when card detection start button B1 in a card detection processing control screen (FIG. 16) displayed on the control block 12 is pressed through the operator block 11, the control block 5 of the first wireless communication apparatus 2A recognizes the pressing as a non-contact IC card detection command operation, thereby executing detection processing. When card detection end button B2 in this card detection processing control screen is pressed through the operator block 11, the control block 5 of the first wireless communication apparatus 2A stops detection processing. Thus, the first wireless communication apparatus 2A is adapted to start or stop detection processing in accordance with a user operation, so that power consumption can be significantly saved as compared with the constant execution of detection processing. In addition, the control block 5 of the first wireless communication apparatus 2A is adapted to display a status of communication with the destination of wireless data communication onto communication status display area AR1 in this card detection processing control screen.

Next, in step SP2, the control block 5 of the first wireless communication apparatus 2A receives the storage status notification signal from the non-contact IC card 3 and determines whether temporary setting information It is stored in the non-contact IC card 3 on the basis of the received storage status notification signal.

In this case, the control block 5 of the first wireless communication apparatus 2A determines that temporary setting information It is not stored in the non-contact IC card 3 on the basis of the received storage status notification signal, upon which the procedure goes to subroutine SRT1 to execute temporary setting information write processing.

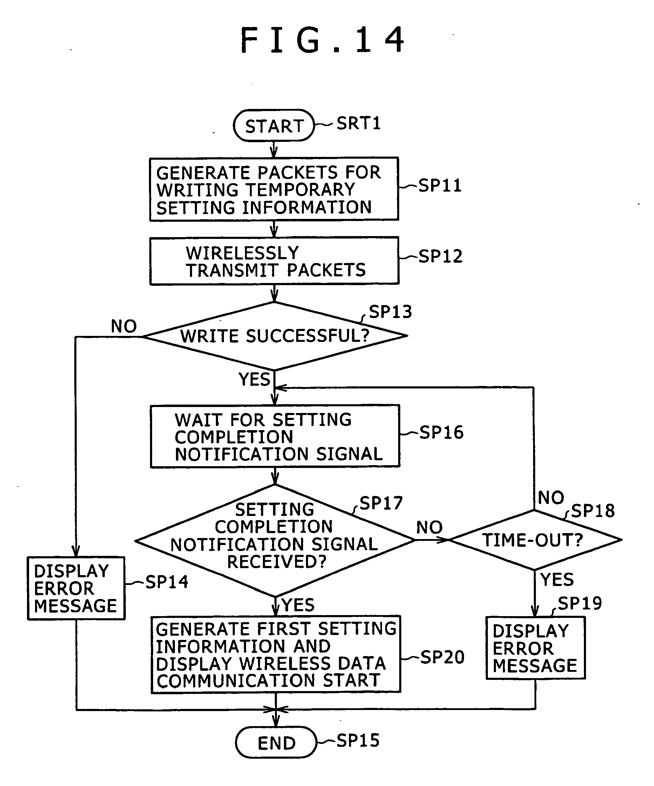

The control block 5 of the first wireless communication apparatus 2A moves to step SP11 of temporary setting information write processing procedure SRT1 shown in FIG. 14 to generate packets for transmitting temporary setting information It from the setting information storage block 4 to the non-contact IC card 3.

Next, the control block 5 of the first wireless communication apparatus 2A moves to step SP12 to wirelessly transmit temporary setting information It to the non-contact IC card 3 by means of the generated packets.

Next, the control block 5 of the first wireless communication apparatus 2A moves to step SP13 and wirelessly communicates with the non-contact IC card 3 to determine whether temporary setting information has been written to the non-contact IC card 3.

If the decision is No in step SP13, then it indicates that transmitted temporary setting information It is not correctly stored in the temporary setting information storage block 15 of the non-contact IC card 3. Then, the control block 5 of the first wireless communication apparatus 2A determines that temporary setting information It has not been written and moves to step SP14 to display error information indicative thereof onto the control block 12. Then, the control block 5 moves to end step SP15 to end this temporary setting information write processing procedure SRT1.

On the other hand, if the decision in step SP13 is Yes, it indicates that transmitted temporary setting information is correctly stored in the temporary setting information storage block 15 of the non-contact IC card 3. The control block 5 of the first wireless communication apparatus 2A moves to step SP16 to get in a wait status for a setting completion notification signal from the destination of wireless data communication (in this case, the second wireless communication apparatus 2B).

Next, the control block 5 of the first wireless communication apparatus 2A determines in step SP17 whether a setting completion notification signal has been received from the destination of wireless communication. If the setting completion notification signal is found not received, then the control block 5 moves to step SP18 to determine whether to execute a time-out operation.

If the decision is Yes in step SP18, it indicates that a predetermined time has passed since the setting completion notification signal wait status. Then, the control block 5 of the first wireless communication apparatus 2A moves to step SP19 to display error information on the display block 12 indicative that the setting completion notification signal has not been received. Then, the control block 5 moves to end step SP15 to end this temporary setting information write processing procedure SRT1. On the other hand, if the decision in step SP18 is No, it indicates that a predetermined time has not passed since the setting completion notification signal wait status. Then, the control block 5 of the first wireless communication apparatus 2A returns to step SP16 to wait for the setting completion notification signal from the destination of wireless data communication.

Meanwhile, if a setting completion notification signal has been received from the second wireless communication apparatus 2B that is the destination of wireless data communication, the decision in step SP17 is Yes and the control block 5 of the first wireless communication apparatus 2A moves to step SP20.

In step SP20, the control block 5 of the first wireless communication apparatus 2A generates first setting information I1 on the basis of the setting completion notification signal received from the second wireless communication apparatus 2B. As a result, the control block 5 of the first wireless communication apparatus 2A starts wireless data communication with the second wireless communication apparatus 2B as shown in FIG. 12 and, at the same time, displays information indicative of the start of wireless data communication onto the control block 12, upon which the control block 5 moves to step SP15 to end this temporary setting information write processing procedure SRT1.

### (2-2) Execution of a setting processing procedure by the second wireless communication apparatus

When a non-contact IC card detection command operation is executed through the operator block 11 in step SP1 shown in FIG. 13, the control block 5 of the second wireless communication apparatus 2B executes detection processing for detecting the non-contact IC card 3. Actually, in this detection processing, the control block 5 of the second wireless communication apparatus 2B repetitively wirelessly transmits at predetermined time intervals a storage status notification request signal for requesting the non-contact IC card 3 to notify whether or not temporary setting information It is stored, via the proximity wireless communication block 9 and the proximity wireless communication antenna 8 in this order.

Next, in step SP2, the control block 5 of the second wireless communication apparatus 2B receives the storage status notification signal from the non-contact IC card 3 and determines whether temporary setting information It is stored in the non-contact IC card 3 on the basis of the received storage status notification signal.

In this case, the control block 5 of the second wireless communication apparatus 2B determines that temporary setting information It is stored in the non-contact IC card 3 on the basis of the received storage status notification signal, upon which the procedure goes to subroutine SRT2 to execute temporary setting information read processing.

The control block 5 of the second wireless communication apparatus 2B moves to step SP31 of temporary setting information read processing procedure SRT2 shown in FIG. 15 to wirelessly transmit a temporary setting information transmission request signal for requesting the non-contact IC card 3 for the transmission of temporary setting information It.

Next, in step SP32, the control block 5 of the second wireless communication apparatus 2B determines whether temporary setting information It has been read from the non-contact IC card 3.

If the decision in step SP32 is No, it indicates that the reading of temporary setting information It failed because temporary setting information It has not been received from the non-contact IC card 3. Then, the control block 5 of the second wireless communication apparatus 2B moves to step SP33 and displays error information indicative of the failure of reading of temporary setting information It onto the control block 12. Then, the control block 5 moves to end step SP34 to end this temporary setting information read processing procedure SRT2.

On the other hand, if the decision in step SP32 is Yes, it indicates that the reading of temporary setting information It is successful because temporary setting information has been received from the non-contact IC card 3. Then, the control block 5 of the second wireless communication apparatus 2B moves to step SP35 to generate second setting information I2 on the basis of the read temporary setting information It.

Next, the control block 5 of the second wireless communication apparatus 2B moves to step SP36 and transmits a setting completion notification signal indicative of the completion of setting of second setting information I2 to the first wireless communication apparatus 2A through the wireless communication block 6 and the wireless communication antenna 7. Then, the control block 5 moves to end step SP34 to end this temporary setting information read processing procedure SRT2.

### (3) Operation and effects

In the above-mentioned configuration, the wireless communication system 1 has the first and second wireless communication apparatuses 2A and 2B that are capable of wireless data communication and the non-contact IC card 3 that is capable of wirelessly communicating with the first and second wireless communication apparatuses 2A and 2B that are arranged in proximity within a predetermined range.

The first and second wireless communication apparatuses 2A and 2B have each the setting information storage block 4, the wireless communication block 6, and the proximity wireless communication block 9. The setting information storage block 4 stores setting information containing communication destination identification information for identifying the destination of wireless data communication. The wireless communication block 6 wirelessly communicates with the destination of wireless data communication that is identified by the communication destination identification information contained in the setting information stored in the setting information storage block 4. The proximity wireless communication block 9 has proximity wireless communication with the non-contact IC card 3 brought to the proximity of a predetermined range.

If the control block 5 of the first wireless communication apparatus 2A for example recognizes that temporary setting information It is not stored in the non-contact IC card 3 brought to proximity with the state that first setting information I1 and second setting information I2 are not set to the first and second wireless communication apparatuses 2A and 2B respectively, the control block 5 wirelessly transmits temporary setting information It to the non-contact IC card 3. The information It contains communication mate identification information IPS1 so that the destination of wireless communication identify the first wireless communication apparatus 2A as the communication mate. At this moment, receiving temporary setting information It from the first wireless communication apparatus 2A, the control block 12 of the non-contact IC card 3 stores the received temporary setting information It into the temporary setting information storage block 15.

Then, when the non-contact IC card 3 storing this temporary setting information It is brought to the proximity of the second wireless communication apparatus 2B and the control block 5 thereof accordingly recognizes that temporary setting information It is stored in this non-contact IC card 3, the control block 5 wirelessly transmits a temporary setting information transmission request signal for requesting the transmission of this temporary setting information It to the non-contact IC card 3. At this moment, receiving this temporary setting information transmission request signal, the non-contact IC card 3 accordingly wirelessly transmits temporary setting information It from the temporary setting information storage block 15 to the second wireless communication apparatus 2B.

The control block 5 of the second wireless communication apparatus 2B receives temporary setting information It from the non-contact IC card 3 and sets communication mate identification information IPS1 contained in the received temporary setting information It as communication mate identification information IPT2, thereby generating second setting information I2.

Next, the control block 5 of the second wireless communication apparatus 2B wirelessly transmits a setting completion notification signal indicative of communication mate identification information IPS2 for identifying the second wireless communication apparatus 2B as the mate of communication by the destination of wireless communication to the first wireless communication apparatus 2A. The apparatus 2A is identified by communication destination identification information IPT2 contained in second setting information I2.

Consequently, receiving the setting completion notification signal from the second wireless communication apparatus 2B, the control block 5 of the first wireless communication apparatus 2A sets communication mate identification information IPS2 contained in the received setting completion notification signal as communication destination identification information IPT1, thereby generating first setting information I1.

Therefore, only by bringing the non-contact IC card 3 to the proximity of the first wireless communication apparatus 2A and then bringing the non-contact IC card 3 to the proximity of the second wireless communication apparatus 2B, the user can set first setting information I1 containing communication destination identification information IPT1 for identifying the second wireless communication apparatus 2B to the first wireless communication apparatus 2A. At the same time, the user can set second setting information I2 containing communication destination identification information IPT2 for identifying the first wireless communication apparatus 2A to the second wireless communication apparatus 2B.

Consequently, the first and second wireless communication apparatuses 2A and 2B can identify each other as the destination of wireless data communication on the basis of first setting information I1 and second setting information I2 set thereto respectively, thereby transferring data with each other by wireless data communication.

In the present embodiment, the first wireless communication apparatus 2A is adapted to set also wireless network identification information SID and cryptographic key information WK to temporary setting information It to be written to the non-contact IC card 3. Consequently, the second wireless communication apparatus 2B that reads temporary setting information It from the non-contact IC card 3 can set the same wireless network identification information SID and cryptographic key information WK as those of the first wireless communication apparatus 2A to second setting information I2 on the basis of this temporary setting information It. As a result, the first and second wireless communication apparatuses 2A and 2B can form a wireless network composed thereof and encrypt data to be transferred with each other, thereby enhancing the security of wireless data communication.

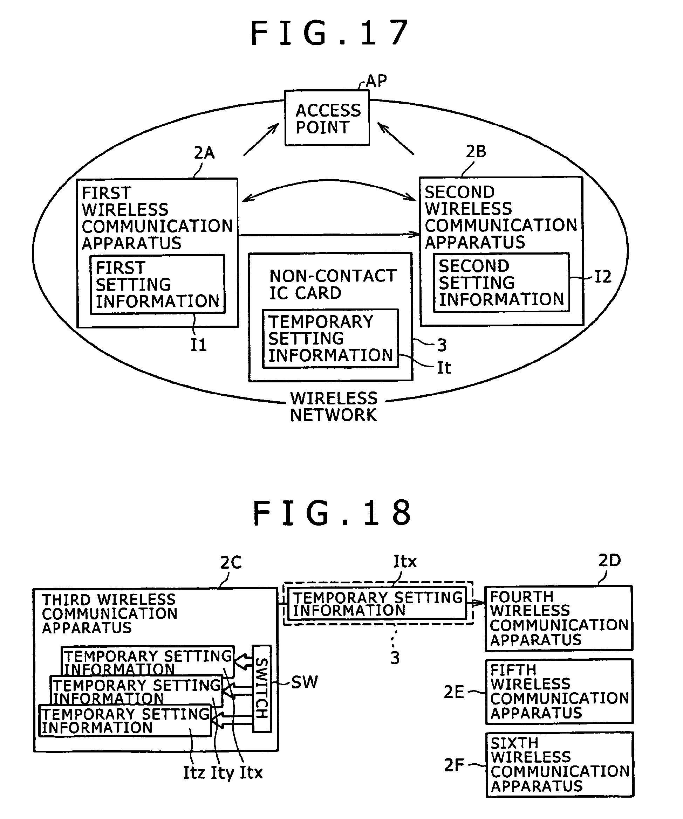

In the present embodiment, an example is used in which the first and second wireless communication apparatuses 2A and 2B execute wireless data communication in the ad hoc mode. However, the present invention is not limited to this example. For example, as shown in FIG. 17, the present invention is also applicable when the first and second wireless communication apparatuses 2A and 2B execute wireless data communication via access point AP. In this case, the first and second wireless communication apparatuses 2A and 2B can be set by procedures similar to those described above, except that wireless network identification information SID contained in temporary setting information It temporarily set to the first wireless communication apparatus 2A is matched with wireless network identification information SID set to access point AP in advance.

According to the above-mentioned configurations, in the non-contact IC card 3, communication mate identification information IPS1 can be stored for identifying this first wireless communication apparatus 2A as the mate of communication by bringing the non-contact IC card 3 storing no communication mate identification information to the proximity of the first wireless communication apparatus 2A. The first wireless communication apparatus 2A to be identified by this communication mate identification information IPS1 is set to the second wireless communication apparatus 2B as the destination of wireless data communication by bringing this non-contact IC card 3 storing this communication mate identification information IPS1 to the proximity of the second wireless communication apparatus 2B. This configuration saves the manual input of setting information to each of the first and second wireless communication apparatuses 2A and 2B, thereby setting the first and second wireless communication apparatuses 2A and 2B significantly easily.

### (4) Other embodiments

In the above-mentioned embodiments, the first and second wireless communication apparatuses 2A and 2B execute wireless data communication with each other on a one to one basis. The present invention is not limited to this configuration. For example, wireless data communication may be practiced between one wireless communication apparatus 2C and a plurality of wireless communication apparatuses 2D, 2E, and 2F as shown in FIG. 18.

In this case, for example, the third wireless communication apparatus 2C has a switch SW electrically or physically arranged for switching between three pieces of stored temporary setting information Itx, Ity, and Itz. In the example shown in FIG. 18, three pieces of temporary setting information Itx, Ity, and Itz stored in the third wireless communication apparatus 2C correspond to different pieces of cryptographic key information WK. The third wireless communication apparatus 2C writes temporary setting information Itx, Ity, or Itz selected by the switch SW to the non-contact IC card 3 brought to the proximity of the apparatus 2C. Consequently, the user executes a job of writing temporary setting information It, Ity, and Itz selected by the switch SW to the non-contact IC card 3. Then, the user executes to store temporary setting information Itx, Ity, and Itz stored in the non-contact IC card 3 into a fourth to sixth wireless communication apparatuses 2D, 2E, and 2F respectively. Thus, setting information Ix, Iy, and Iz having different pieces of cryptographic key information WK are set to these apparatuses 2D, 2E, 2F and setting information Ix', Iy', and Iz' corresponding to setting information Ix, Iy, and Iz are set to the third wireless communication apparatus 2C. As a result, operating the switch SW so as to use setting information Iz' of the third wireless communication apparatus 2C allows wireless data communication between the sixth wireless communication 2F having setting information Iz corresponding to setting information Iz' and this third wireless communication apparatus 2C, as shown in FIG. 19.

In the above-mentioned embodiments, cryptographic key information WK has already been set in temporary setting information It shown in FIG. 3A. The present invention is not limited to this configuration. For example, this cryptographic key information WK may be randomly generated immediately before the first wireless communication apparatus 2A writes temporary setting information It to the non-contact IC card 3.

In the above-mentioned embodiments, the first and second wireless communication apparatuses 2A and 2B execute detection processing in accordance with a non-contact IC card detection command operation done by the user. The present invention is not limited to this configuration. For example, the first and second wireless communication apparatuses 2A and 2B may execute detection processing on their own.

In the above-mentioned embodiments, personal computers for example are used for the first and second wireless communication apparatuses 2A and 2B. The present invention is not limited to this configuration. For example, other various kinds of information processing devices may be used, such as PDAs (Personal Digital Assistances) for the first and second wireless communication apparatuses 2A and 2B.

In the above-mentioned embodiments, the non-contact IC card 3 that wirelessly communicates on the basis of FeliCa (trademark) modulating of 13.56 MHz or ISO 14443A/B for example is applied as the proximity wireless communication apparatus that wirelessly communicates with wireless communication apparatuses arranged in the proximity of a predetermined range. The present invention is not limited to this configuration. For example, proximity wireless communication apparatuses based on various other wireless communication methods, such as Bluetooth (trademark) may be applied. In the above-mentioned embodiments, the non-contact IC card 3 having a size of a business card for example is assumed as the proximity wireless communication apparatus. The present invention is not limited to this configuration. For example, a mobile phone incorporating this non-contact IC card 3 is also applicable.

In the above-mentioned embodiments, the control block 5 of each of the first and wireless communication apparatuses 2A and 2B executes, by means of software, the above-mentioned setting processing procedure RT1, temporary setting information write processing procedure SRT1, and temporary setting information read processing procedure SRT2 in accordance with pre-installed programs. The present invention is not limited to this configuration. For example, circuits for executing the above-mentioned setting processing procedure RT1, temporary setting information write processing procedure SRT1, and temporary setting information read processing procedure SRT2 may be arranged on the first and second wireless communication apparatuses 2A and 2B, thereby executing these procedures by means of hardware. Also, programs for executing these procedures may be recorded to a recording medium such as CD (Compact Disc).

The present invention is applicable to the setting of a plurality of wireless communication apparatuses such that these apparatuses can wirelessly communicate with each other.

It should be understood by those skilled in the art that various modifications, combinations, subcombinations, and alternations may occur depending on design requirements and other factors insofar as they are within the scope of the appended claims or the equivalents thereof.

## Claims

1. A wireless communication setting method for a wireless communication system having a plurality of wireless communication apparatuses (2A, 2B) each having a setting block (4) to which a wireless data communication destination is set and a wireless data communication block (6) for executing wireless data communication with said wireless data communication destination set to said setting block (4), and a proximity wireless communication apparatus (3) for executing wireless communication with any of said plurality of wireless communication apparatuses brought into proximity of a predetermined range of said proximity wireless communication apparatus (3);
**characterized in that** said wireless communication setting method comprises the steps of:
in said proximity wireless communication apparatus (3):
storing communication mate identification information received from said wireless communication apparatuses (2A, 2B) brought into proximity of said proximity wireless communication apparatus (3) for identifying said wireless communication apparatus as a communication mate; and
wirelessly transmitting communication mate identification information if stored to said wireless communication apparatus brought into proximity of said proximity wireless communication apparatus (3); and
in each of said plurality of wireless communication apparatuses (2A, 2B):
wirelessly transmitting communication mate identification information to said proximity wireless communication apparatus (3), if said communication mate identification information is not stored in said proximity wireless communication apparatus (3) brought into proximity of said wireless communication apparatus, for identifying said wireless communication apparatus itself as a communication mate; and
setting said wireless communication apparatus (2A, 2B) to said setting block as a wireless data communication destination, said wireless communication apparatus being identified by said communication mate identification information received from said proximity wireless communication apparatus (3) if said communication mate identification information is stored in said proximity wireless communication apparatus (3) brought into proximity of said wireless communication apparatus.

2. A wireless communication setting computer program comprising code means which, when executed in the processor of a computer, perform all the steps of the method of claim 1.

3. A storage medium storing a wireless communication setting computer program of claim 2.

4. A wireless communication apparatus (2A, 2B) comprising:
a setting block (4) to which a wireless data communication destination is set;
a wireless data communication block (6) for executing wireless data communication with said wireless data communication destination set to said setting block (4); and
a proximity wireless communication block (9)
**characterized in that** said proximity wireless communication block (9) is configured for, if a proximity wireless communication apparatus (3) having a storage block (15) for storing communication mate identification information received from a wireless communication apparatus (2A, 2B) brought to proximity of a predetermined range of said proximity wireless communication apparatus (3) for identifying said wireless communication apparatus as a communication mate and a wireless communication block (14) for transmitting said communication mate identification information if stored in said storage block (15) to said proximity wireless communication apparatus, does not store said communication mate identification information in said storage block (15), transmitting communication mate identification information for identifying said wireless communication apparatus (2A, 2B) itself as a communication mate to said proximity wireless communication apparatus (3); wherein said wireless communication apparatus further comprises
a setting control block (5) for, if said communication mate identification information is stored in said storage block (15) of said proximity wireless communication apparatus brought to proximity of said wireless communication apparatus (2A, 2B), receiving said communication mate identification information from said proximity wireless communication apparatus (3) and setting said wireless communication apparatus (2A, 2B) identified by the received communication mate identification information to said setting block as a wireless data communication destination.

5. A wireless communication system comprising:
a plurality of wireless communication apparatuses (2A, 2B) and a proximity wireless communication apparatus (3) both in accordance with claim 4,
wherein each of said wireless communication apparatuses (2A, 2B) has said setting block (4), said wireless data communication block (6), said proximity wireless communication block (9) and said setting control block (5), and
said proximity wireless communication apparatus (3) is configured for executing wireless communication with any of said plurality of wireless communication apparatuses (2A, 2B) brought into proximity of a predetermined range of said proximity wireless communication apparatus (3).

6. The wireless communication system according to claim 5, wherein said plurality of wireless communication apparatuses (2A, 2B) : are adapted to each transmit communication mate identification information for identifying any one of said plurality of wireless communication apparatuses (2A, 2B) as a communication mate by said wireless data communication destination set to said setting block (4).

7. The wireless communication system according to claim 5, wherein said proximity wireless communication apparatus (3) is adapted to
store, upon reception of wireless network identification information (SID) for identifying a wireless network along with said communication mate identification information (IPS1) from any one of said plurality of wireless communication apparatuses (2A, 2B), the received wireless network identification information (SID) into said storage block (15), and to
transmit said wireless network identification information (SID) to any one of said plurality of wireless communication apparatuses (2A, 2B) brought to proximity of said proximity wireless communication apparatus (2A, 2B) along with said communication mate identification information (IPS1) if said wireless network identification information (SID) is stored in said storage block (15) along with said communication mate identification information (IPS1) and
any one of said plurality of wireless communication apparatuses (2A, 2B) are adapted to
transmit said wireless network identification information (SID) to said proximity wireless communication apparatus (3) along with communication mate identification information (IPS1) for identifying said wireless communication apparatus (2A, 2B) itself as a communication mate if said communication mate identification information (IPS1) and said wireless network identification information (SID) are not stored in said proximity wireless communication apparatus (3) brought to proximity of said wireless communication apparatus (2A, 2B), and to
receive said wireless network identification information (SID) to be transmitted along with said communication mate identification information (IPS1) from said proximity wireless communication apparatus (3) to set the received wireless network identification information (SID) to said setting block (4) if said communication mate identification information (IPS1) and said wireless network identification information (SID) are stored in said proximity wireless communication apparatus (3) brought to proximity of said wireless communication apparatus (2A, 2B);
thereby executing wireless data communication with any one of said plurality of wireless communication apparatuses (2A, 2B), that has been set to said setting block (4) as a wireless data communication destination among said plurality of wireless communication apparatuses (2A, 2B) identified by said wireless network identification information set (SID) to said setting block (4).

8. The wireless communication system according to claim 5 wherein said proximity wireless communication apparatus (3) is adapted to
store, upon reception of cryptographic key information (WK) for encrypting data along with said communication mate identification information (IPS1), the received cryptographic key information (WK) into said storage block (15), and to
transmit said cryptographic key information (WK) to said wireless communication apparatus (2A, 2B) brought to proximity of said proximity wireless communication apparatus (3) along with said communication mate identification information (IPS1) if said cryptographic key information (WK) is stored in said storage block (15) along with said communication mate identification information (IPS1); and
said wireless communication apparatus (2A, 2B) is adapted to
transmit said cryptographic key information (WK) to said proximity wireless communication apparatus (3) along with communication mate identification information (IPS1) for identifying said wireless communication apparatus (2A, 2B) itself as a communication mate if said communication mate identification information (IPS1) and said cryptographic key information (WK) are not stored in said proximity wireless communication apparatus (3), and to
receive said cryptographic key information (WK) from said proximity wireless communication apparatus (3) along with said communication mate identification information (IPS1) to set the received cryptographic key information (WK) to said setting block (4) if said communication mate identification information (IPS1) and said cryptographic key information (WK) are stored in said proximity wireless communication apparatus (3);
thereby, while executing wireless data communication with said wireless communication apparatus (2A, 2B) set to said setting block (4) as a wireless data communication destination, decrypting encrypted data received by said wireless data communication by use of said cryptographic key information (WK) set to said setting block (4) and encrypting data to be transmitted by said wireless data communication by use of said cryptographic key information (WK) set to said setting block.

## Patentansprüche

1. Verfahren zum Einstellen einer drahtlosen Kommunikation für ein drahtloses Kommunikationssystem, mit mehreren drahtlosen Kommunikationsvorrichtungen (2A, 2B), wovon jede einen Einstellblock (4), an dem ein Ziel für eine drahtlose Datenkommunikation eingestellt wird, und einen Block (6) für drahtlose Datenkommunikation zum Ausführen einer drahtlosen Datenkommunikation mit dem an dem Einstellblock (4) eingestellten Ziel für eine drahtlose Datenkommunikation enthält, und einer drahtlosen Nahkommunikationsvorrichtung (3) zum Ausführen einer drahtlosen Kommunikation mit irgendeiner der mehreren drahtlosen Kommunikationsvorrichtungen, die in die Nähe eines vorgegebenen Bereichs der drahtlosen Nahkommunikationsvorrichtung (3) gebracht sind;
**dadurch gekennzeichnet, dass** das Verfahren zum Einstellen einer drahtlosen Kommunikation die folgenden Schritte enthält:
in der drahtlosen Nahkommunikationsvorrichtung (3):
Speichern von Kommunikationspartner-Identifizierungsinformationen, die von den drahtlosen Kommunikationsvorrichtungen (2A, 2B), die in die Nähe der drahtlosen Nahkommunikationsvorrichtung (3) gebracht werden, empfangen werden, um die drahtlose Kommunikationsvorrichtung als einen Kommunikationspartner zu identifizieren; und
drahtloses Senden von Kommunikationspartner-Identifizierungsinformationen, falls sie in der drahtlosen Kommunikationsvorrichtung, die in die Nähe der drahtlosen Nahkommunikationsvorrichtung (3) gebracht worden ist, gespeichert sind; und
in jeder der mehreren drahtlosen Kommunikationsvorrichtungen (2A, 2B): drahtloses Senden von Kommunikationspartner-Identifizierungsinformationen zu der drahtlosen Nahkommunikationsvorrichtung (3), falls die Kommunikationspartner-Identifizierungsinformationen nicht in der drahtlosen Nahkommunikationsvorrichtung (3), die in die Nähe der drahtlosen Kommunikationsvorrichtung gebracht worden ist, gespeichert sind, um die drahtlose Kommunikationsvorrichtung selbst als einen Kommunikationspartner zu identifizieren; und
Einstellen der drahtlosen Kommunikationsvorrichtung (2A, 2B) auf den Einstellblock als ein Ziel für eine drahtlose Datenkommunikation, wobei die drahtlose Kommunikationsvorrichtung durch die Kommunikationspartner-Identifizierungsinformationen, die von der drahtlosen Nahkommunikationsvorrichtung (3) empfangen werden, identifiziert wird, falls die Kommunikationspartner-Identifizierungsinformationen in der drahtlosen Nahkommunikationsvorrichtung (3), die in die Nähe der drahtlosen Kommunikationsvorrichtung gebracht worden ist, gespeichert sind.

2. Computerprogramm zum Einstellen einer drahtlosen Kommunikation, das Codemittel enthält, die dann, wenn sie in dem Prozessor eines Computers ausgeführt werden, sämtliche Schritte des Verfahrens nach Anspruch 1 ausführen.

3. Speichermedium, das ein Computerprogramm zum Einstellen einer drahtlosen Kommunikation nach Anspruch 2 speichert.

4. Drahtlose Kommunikationsvorrichtung (2A, 2B), mit:
einem Einstellblock (4), auf den ein Ziel für eine drahtlose Datenkommunikation eingestellt ist;
einem Block (6) für drahtlose Datenkommunikation zum Ausführen einer drahtlosen Datenkommunikation mit dem Ziel für eine drahtlose Datenkommunikation, das auf den Einstellblock (4) eingestellt worden ist; und
einem drahtlosen Nahkommunikationsblock (9),
**dadurch gekennzeichnet, dass** der drahtlose Nahkommunikationsblock (9) konfiguriert ist, um dann, wenn eine drahtlose Nahkommunikationsvorrichtung (3), die einen Speicherblock (15) besitzt, um Kommunikationspartner-Identifizierungsinformationen zu speichern, die von einer drahtlosen Kommunikationsvorrichtung (2A, 2B) empfangen werden, die in die Nähe eines vorgegebenen Bereichs der drahtlosen Nahkommunikationsvorrichtung (3) gebracht worden ist, um die drahtlose Kommunikationsvorrichtung als einen Kommunikationspartner zu identifizieren, und einen Block (14) für eine drahtlose Kommunikation besitzt, um die Kommunikationspartner-Identifizierungsinformationen, falls diese in dem Speicherblock (15) gespeichert sind, an die drahtlose Nahkommunikationsvorrichtung zu senden, die Kommunikationspartner-Identifizierungsinformationen nicht in dem Speicherblock (15) speichert, die Kommunikationspartner-Identifizierungsinformationen zum Identifizieren der drahtlosen Kommunikationsvorrichtung (2A, 2B) selbst als einen Kommunikationspartner zu der drahtlosen Nahkommunikationsvorrichtung (3) zu senden; wobei die drahtlose Kommunikationsvorrichtung ferner enthält:
einen Einstellsteuerblock (5), um dann, wenn die Kommunikationspartner-Identifizierungsinformationen in dem Speicherblock (15) der drahtlosen Nahkommunikationsvorrichtung gespeichert sind, die in die Nähe der drahtlosen Kommunikationsvorrichtung (2A, 2B) gebracht worden ist, die Kommunikationspartner-Identifizierungsinformationen von der drahtlosen Nahkommunikationsvorrichtung (3) zu empfangen und um die durch die empfangenen Kommunikationspartner-Identifizierungsinformationen identifizierte drahtlose Kommunikationsvorrichtung (2A, 2B) auf den Einstellblock als ein Ziel für eine drahtlose Datenkommunikation einzustellen.

5. Drahtloses Kommunikationssystem, mit:
mehreren drahtlosen Kommunikationsvorrichtungen (2A, 2B) und einer drahtlosen Nahkommunikationsvorrichtung (3), beide wie in Anspruch 4 definiert,
wobei jede der drahtlosen Kommunikationsvorrichtungen (2A, 2B) den Einstellblock (4), den Block (6) für eine drahtlose Datenkommunikation, den drahtlosen Nahkommunikationsblock (9) und den Einstellsteuerblock (5) besitzt, und
wobei die drahtlose Nahkommunikationsvorrichtung (3) konfiguriert ist, um eine drahtlose Kommunikation mit irgendeiner der mehreren drahtlosen Kommunikationsvorrichtungen (2A, 2B) auszuführen, die in die Nähe eines vorgegebenen Bereichs der drahtlosen Nahkommunikationsvorrichtung (3) gebracht worden sind.

6. Drahtloses Kommunikationssystem nach Anspruch 5, wobei die mehreren drahtlosen Kommunikationsvorrichtungen (2A, 2B) dazu ausgelegt sind, jeweils Kommunikationspartner-Identifizierungsinformationen zum Identifizieren irgendeiner der mehreren drahtlosen Kommunikationsvorrichtungen (2A, 2B) als einen Kommunikationspartner durch das durch den Einstellblock (4) eingestellte Ziel für eine drahtlose Datenkommunikation zu senden.

7. Drahtloses Kommunikationssystem nach Anspruch 5, wobei die drahtlose Nahkommunikationsvorrichtung (3) dazu ausgelegt ist,
bei Empfang von Identifizierungsinformationen (SID) für ein drahtloses Netz zum Identifizieren eines drahtlosen Netzes zusammen mit Kommunikationspartner-Identifizierungsinformationen (IPS1) von irgendeiner der mehreren drahtlosen Kommunikationsvorrichtungen (2A, 2B) die empfangenen Identifizierungsinformationen (SID) für ein drahtloses Netz in dem Speicherblock (15) zu speichern und um
die Identifizierungsinformationen (SID) für ein drahtloses Netz an irgendeine der mehreren drahtlosen Kommunikationsvorrichtungen (2A, 2B), die in die Nähe der drahtlosen Nahkommunikationsvorrichtung (2A, 2B) gebracht worden sind, zusammen mit den Kommunikationspartner-Identifizierungsinformationen (IPS1) zu senden, falls die Identifizierungsinformationen (SID) für ein drahtloses Netz in dem Speicherblock (15) zusammen mit den Kommunikationspartner-Identifizierungsinformationen (IPS1) gespeichert sind, und
irgendeine der mehreren drahtlosen Kommunikationsvorrichtungen (2A, 2B) dazu ausgelegt ist,
die Identifizierungsinformationen (SID) für ein drahtloses Netz zusammen mit Kommunikationspartner-Identifizierungsinformationen (IPS1) zum Identifizieren der drahtlosen Kommunikationsvorrichtung (2A, 2B) selbst als einen Kommunikationspartner zu der drahtlosen Nahkommunikationsvorrichtung (3) zu senden, falls die Kommunikationspartner-Identifizierungsinformationen (IPS1) und die Identifizierungsinformationen (SID) für ein drahtloses Netz nicht in der drahtlosen Nahkommunikationsvorrichtung (3), die in die Nähe der drahtlosen Kommunikationsvorrichtung (2A, 2B) gebracht worden ist, gespeichert sind, und um
die Identifizierungsinformationen (SID) für ein drahtloses Netz, die zusammen mit den Kommunikationspartner-Identifizierungsinformationen (IPS1) von der drahtlosen Nahkommunikationsvorrichtung (3) gesendet werden sollen, zu empfangen, um die empfangenen Identifizierungsinformationen (SID) für ein drahtloses Netz auf den Einstellblock (4) einzustellen, falls die Kommunikationspartner-Identifizierungsinformationen (IPS1) und die Identifizierungsinformationen (SID) für ein drahtloses Netz in der drahtlosen Nahkommunikationsvorrichtung (3), die in die Nähe der drahtlosen Kommunikationsvorrichtung (2A, 2B) gebracht worden ist, gespeichert sind;
um **dadurch** eine drahtlose Datenkommunikation mit irgendeiner der mehreren drahtlosen Kommunikationsvorrichtungen (2A, 2B), die auf den Einstellblock (4) als ein Ziel für eine drahtlose Datenkommunikation eingestellt worden ist, unter den mehreren drahtlosen Kommunikationsvorrichtungen (2A, 2B), die durch die auf den Einstellblock (4) eingestellten Identifizierungsinformationen (SID) für ein drahtloses Netz identifiziert werden, auszuführen.

8. Drahtloses Kommunikationssystem nach Anspruch 5, wobei die drahtlose Nahkommunikationsvorrichtung (3) dazu ausgelegt ist,
bei Empfang von Verschlüsselungsschlüssel-Informationen (WK) zum Verschlüsseln von Daten zusammen mit den Kommunikationspartner-Identifizierungsinformationen (IPS1) die empfangenen Verschlüsselungsschlüssel-Informationen (WK) in dem Speicherblock (15) zu speichern und um
die Verschlüsselungsschlüssel-Informationen (WK) zusammen mit den Kommunikationspartner-Identifizierungsinformationen (IPS1) zu der drahtlosen Kommunikationsvorrichtung (2A, 2B), die in die Nähe der drahtlosen Nahkommunikationsvorrichtung (3) gebracht worden ist, zu senden, falls die Verschlüsselungsschlüssel-Informationen (WK) in dem Speicherblock (15) zusammen mit den Kommunikationspartner-Identifizierungsinformationen (IPS1) gespeichert sind; und
die drahtlose Kommunikationsvorrichtung (2A, 2B) dazu ausgelegt ist,
die Verschlüsselungsschlüssel-Informationen (WK) zusammen mit den Kommunikationspartner-Identifizierungsinformationen (IPS1) zum Identifizieren der drahtlosen Kommunikationsvorrichtung (2A, 2B) selbst als einen Kommunikationspartner zu der drahtlosen Nahkommunikationsvorrichtung (3) zu senden, falls die Kommunikationspartner-Identifizierungsinformationen (IPS1) und die Verschlüsselungsschlüssel-Informationen (WK) nicht in der drahtlosen Nahkommunikationsvorrichtung (3) gespeichert sind, und um
die Verschlüsselungsschlüssel-Informationen (WK) von der drahtlosen Nahkommunikationsvorrichtung (3) zusammen mit den Kommunikationspartner-Identifizierungsinformationen (IPS1) zu empfangen, um die empfangenen Verschlüsselungsschlüssel-Informationen (WK) auf den Einstellblock (4) einzustellen, falls die Kommunikationspartner-Identifizierungsinformationen (IPS1) und die Verschlüsselungsschlüssel-Informationen (WK) in der drahtlosen Nahkommunikationsvorrichtung (3) gespeichert sind;
wodurch während der Ausführung einer drahtlosen Datenkommunikation mit der drahtlosen Kommunikationsvorrichtung (2A, 2B), die auf den Einstellblock (4) als ein Ziel für eine drahtlose Datenkommunikation eingestellt ist, verschlüsselte Daten, die durch die drahtlose Datenkommunikation empfangen werden, unter Verwendung der Verschlüsselungsschlüssel-Informationen (WK), die auf den Einstellblock (4) eingestellt worden sind, entschlüsselt werden und Daten, die durch die drahtlose Datenkommunikation gesendet werden sollen, unter Verwendung der Verschlüsselungsschlüssel-Informationen (WK), die auf den Einstellblock eingestellt worden sind, verschlüsselt werden.

## Revendications

1. Procédé de configuration de communication sans fil pour un système de communication sans fil comportant une pluralité d'appareils de communication sans fil (2A, 2B) possédant chacun un bloc de configuration (4) sur lequel est configurée une destination de communication de données sans fil et un bloc de communication de données sans fil (6) destiné à exécuter une communication de données sans fil avec ladite destination de communication de données sans fil configurée sur ledit bloc de configuration (4), et un appareil de communication sans fil de proximité (3) destiné à exécuter une communication sans fil avec l'un quelconque des appareils de ladite pluralité d'appareils de communication sans fil amenés à proximité dans une plage prédéterminée dudit appareil de communication sans fil de proximité (3) ;
**caractérisé en ce que** ledit procédé de configuration de communication sans fil comprend les étapes consistant à :
dans ledit appareil de communication sans fil de proximité (3) :
stocker des informations d'identification de partenaire de communication reçues en provenance desdits appareils de communication sans fil (2A, 2B) amenés à proximité dudit appareil de communication sans fil de proximité (3) pour identifier ledit appareil de communication sans fil en tant que partenaire de communication ; et
transmettre sans fil des informations d'identification de partenaire de communication, si elles sont stockées, audit appareil de communication sans fil amené à proximité dudit appareil de communication sans fil de proximité (3) ; et
dans chaque appareil de ladite pluralité d'appareils de communication sans fil (2A, 2B) :
transmettre sans fil des informations d'identification de partenaire de communication audit appareil de communication sans fil de proximité (3), si lesdites informations d'identification de partenaire de communication ne sont pas stockées dans ledit appareil de communication sans fil de proximité (3) amené à proximité dudit appareil de communication sans fil, pour identifier ledit appareil de communication sans fil lui-même en tant que partenaire de communication ; et
configurer ledit appareil de communication sans fil (2A, 2B) sur ledit bloc de configuration en tant que destination de communication de données sans fil, ledit appareil de communication sans fil étant identifié par lesdites informations d'identification de partenaire de communication reçues en provenance dudit appareil de communication sans fil de proximité (3) si lesdites informations d'identification de partenaire de communication sont stockées dans ledit appareil de communication sans fil de proximité (3) amené à proximité dudit appareil de communication sans fil.

2. Programme informatique de configuration de communication sans fil comprenant un moyen de code qui, lorsqu'il est exécuté dans le processeur d'un ordinateur, effectue toutes les étapes du procédé de la revendication 1.

3. Support de stockage stockant un programme informatique de configuration de communication sans fil de la revendication 2.

4. Appareil de communication sans fil (2A, 2B) comprenant :
un bloc de configuration (4) sur lequel est configurée une destination de communication de données sans fil ;
un bloc de communication de données sans fil (6) destiné à exécuter une communication de données sans fil avec ladite destination de communication de données sans fil configurée sur ledit bloc de configuration (4) ; et
un bloc de communication sans fil de proximité (9)
**caractérisé en ce que** ledit bloc de communication sans fil de proximité (9) est configuré pour, si un appareil de communication sans fil de proximité (3) comportant un bloc de stockage (15) destiné à stocker des informations d'identification de partenaire de communication reçues en provenance d'un appareil de communication sans fil (2A, 2B) amené à proximité d'une plage prédéterminée dudit appareil de communication sans fil de proximité (3) pour identifier ledit appareil de communication sans fil en tant que partenaire de communication et un bloc de communication sans fil (14) pour transmettre lesdites informations d'identification de partenaire de communication si elles sont stockées dans ledit bloc de stockage (15) vers ledit appareil de communication sans fil de proximité, ne stocke pas lesdites informations d'identification de partenaire de communication dans ledit bloc de stockage (15), transmettre les informations d'identification de partenaire de communication pour identifier ledit appareil de communication sans fil (2A, 2B) lui-même en tant que partenaire de communication audit appareil de communication sans fil de proximité (3) ; dans lequel ledit appareil de communication sans fil comprend en outre
un bloc de commande de configuration (5) pour, si lesdites informations d'identification de partenaire de communication sont stockées dans ledit bloc de stockage (15) dudit appareil de communication sans fil de proximité amené à proximité dudit appareil de communication sans fil (2A, 2B), recevoir lesdites informations d'identification de partenaire de communication en provenance dudit appareil de communication sans fil de proximité (3) et configurer ledit appareil de communication sans fil (2A, 2B) identifié par lesdites informations d'identification de partenaire de communication reçues sur ledit bloc de configuration en tant que destination de communication de données sans fil.

5. Système de communication sans fil comprenant :
une pluralité d'appareils de communication sans fil (2A, 2B) et un appareil de communication sans fil de proximité (3) tous selon la revendication 4,
dans lequel chacun desdits appareils de communication sans fil (2A, 2B) comporte ledit bloc de configuration (4), ledit bloc de communication de données sans fil (6), ledit bloc de communication sans fil de proximité (9) et ledit bloc de commande de configuration (5), et
ledit appareil de communication sans fil de proximité (3) est configuré pour exécuter une communication sans fil avec l'un quelconque de ladite pluralité d'appareils de communication sans fil (2A, 2B) amenés à proximité d'une plage prédéterminée dudit appareil de communication sans fil de proximité (3).

6. Système de communication sans fil selon la revendication 5, dans lequel ladite pluralité d'appareils de communication sans fil (2A, 2B) sont adaptés pour transmettre chacun des informations d'identification de partenaire de communication pour identifier l'un quelconque de ladite pluralité d'appareils de communication sans fil (2A, 2B) en tant que partenaire de communication par ladite destination de communication de données sans fil configurée sur ledit bloc de configuration (4).

7. Système de communication sans fil selon la revendication 5, dans lequel ledit appareil de communication sans fil de proximité (3) est adapté pour
stocker, à réception d'informations d'identification de réseau sans fil (SID) pour identifier un réseau sans fil avec lesdites informations d'identification de partenaire de communication (IPS1) provenant de l'un quelconque de ladite pluralité d'appareils de communication sans fil (2A, 2B), les informations d'identification de réseau sans fil (SID) reçues dans ledit bloc de stockage (15), et pour
transmettre lesdites informations d'identification de réseau sans fil (SID) à l'un quelconque de ladite pluralité d'appareils de communication sans fil (2A, 2B) amenés à proximité dudit appareil de communication sans fil de proximité (2A, 2B) avec lesdites informations d'identification de partenaire de communication (IPS1) si lesdites informations d'identification de réseau sans fil (SID) sont stockées dans ledit bloc de stockage (15) avec lesdites informations d'identification de partenaire de communication (IPS1) et
l'un quelconque de ladite pluralité d'appareils de communication sans fil (2A, 2B) est adapté pour
transmettre lesdites informations d'identification de réseau sans fil (SID) audit appareil de communication sans fil de proximité (3) avec lesdites informations d'identification de partenaire de communication (IPS1) pour identifier ledit appareil de communication sans fil (2A, 2B) lui-même en tant que partenaire de communication si lesdites informations d'identification de partenaire de communication (IPS1) et lesdites informations d'identification de réseau sans fil (SID) ne sont pas stockées dans ledit appareil de communication sans fil de proximité (3) amené à proximité dudit appareil de communication sans fil (2A, 2B), et pour
recevoir lesdites informations d'identification de réseau sans fil (SID) à transmettre avec lesdites informations d'identification de partenaire de communication (IPS1) en provenance dudit appareil de communication sans fil de proximité (3) pour configurer les informations d'identification de réseau sans fil (SID) reçues sur ledit bloc de configuration (4) si lesdites informations d'identification de partenaire de communication (IPS1) et lesdites informations d'identification de réseau sans fil (SID) sont stockées dans ledit appareil de communication sans fil de proximité (3) amené à proximité dudit appareil de communication sans fil (2A, 2B) ;
exécuter ainsi une communication de données sans fil avec l'un quelconque de ladite pluralité d'appareils de communication sans fil (2A, 2B), qui a été configuré sur ledit bloc de configuration (4) en tant que destination de communication de données sans fil parmi ladite pluralité d'appareils de communication sans fil (2A, 2B) identifiés par lesdites informations d'identification de réseau sans fil (SID) configurées sur ledit bloc de configuration (4).

8. Système de communication sans fil selon la revendication 5 dans lequel ledit appareil de communication sans fil de proximité (3) est adapté pour
stocker, à réception d'informations de clé cryptographiques (WK) destinées à crypter des données avec lesdites informations d'identification de partenaire de communication (IPS1), les informations de clé cryptographique (WK) reçues dans ledit bloc de stockage (15), et pour
transmettre lesdites informations de clé cryptographique (WK) audit appareil de communication sans fil (2A, 2B) amené à proximité dudit appareil de communication sans fil de proximité (3) avec lesdites informations d'identification de partenaire de communication (IPS1) si lesdites informations de clé cryptographique (WK) sont stockées dans ledit bloc de stockage (15) avec lesdites informations d'identification de partenaire de communication (IPS1) ; et
ledit appareil de communication sans fil (2A, 2B) est adapté pour
transmettre lesdites informations de clé cryptographique (WK) audit appareil de communication sans fil de proximité (3) avec des informations d'identification de partenaire de communication (IPS1) pour identifier ledit appareil de communication sans fil (2A, 2B) lui-même en tant que partenaire de communication si lesdites informations d'identification de partenaire de communication (IPS1) et lesdites informations de clé cryptographique (WK) ne sont pas stockées dans ledit appareil de communication sans fil de proximité (3), et pour
recevoir lesdites informations de clé cryptographique (WK) en provenance dudit appareil de communication sans fil de proximité (3) avec lesdites informations d'identification de partenaire de communication (IPS1) pour configurer les informations de clé cryptographique (WK) reçues sur ledit bloc de configuration (4) si lesdites informations d'identification de partenaire de communication (IPS1) et lesdites informations de clé cryptographique (WK) sont stockées dans ledit appareil de communication sans fil de proximité (3) ;
ainsi, tout en exécutant une communication de données sans fil avec ledit appareil de communication sans fil (2A, 2B) configuré sur ledit bloc de configuration (4) en tant que destination de communication de données sans fil, décrypter les données cryptées reçues par ladite communication de données sans fil en utilisant lesdites informations de clé cryptographique (WK) configurées sur ledit blocs de configuration (4) et crypter les données à transmettre par ladite communication de données sans fil en utilisant lesdites informations de clé cryptographique (WK) configurées sur ledit bloc de configuration.
